# EUROPEAN PATENT SPECIFICATION

(11) **EP 0 383 000 B1**
(45) Date of publication and mention of the grant of the patent: **10.02.1993**
(21) Application number: 89830253.4
(22) Date of filing: 06.06.1989
(51) Int. Cl.: B65G 59/06, B65G 1/08

(54) **An automatic dispenser for commodities packaged in boxes of parallelepiped or similar shape**
Automatischer Spender für in Dosen verpackte Waren von quaderförmiger oder ähnlicher Gestalt
Distributeur automatique pour produits emballés en boîtes de forme parallélépipédique ou similaire

(30) Priority: 27.01.1989 IT 4001789
(43) Date of publication of application: 22.08.1990
(73) Proprietor: S.A.I.A. s.r.l., 43100 PARMA (IT)
(72) Inventor: Carboni, Giancarlo, I-43100 Parma (IT)
(74) Representative: Lanzoni, Luciano

(56) References cited:
- EP-A- 0 037 989
- EP-A- 0 192 206
- DE-C- 1 001 813
- FR-A- 2 248 217
- US-A- 3 631 992

## Description

The invention relates to an automatic dispenser for commodities packaged in boxes of parallelepiped, or essentially parallelepiped shape.

The prior art embraces various types of automatic dispensers designed for installation in stockrooms to the end of automating stock control.

One such dispenser utilizes a plurality of channels of given cross section substantially matching that of the containers or boxes to be put into stock and subsequently retrieved.

The dispenser in question is beset by certain drawbacks, namely, it does not offer a high storage capacity, and the time required to retrieve boxes is somewhat lengthy, especially when retrieving in multiple quantities as might be the case in the stockroom of a resaler of pharmaceutical products.

An automatic dispenser is known from EP-A-0 192 206, comprising a plurality of adjustable vertical channels provided with means for the ejection of the boxes.

Said dispenser is rather complex and the variation of the vertical channels is not too efficient.

The object of the present invention is to create a dispenser that will afford ample storage capacity and which is easily converted and adapted to take different sizes of container or box, in terms both of capacity and of dispensing speed.

The stated object, and others besides, are realized comprehensively according to the invention with an automatic dispenser as characterized in the claims appended, intended for for commodities packaged in boxes of essentially parallelepiped shape.

The invention will now be described in detail, by way of example, with the aid of the accompanying sheet of drawings, in which:

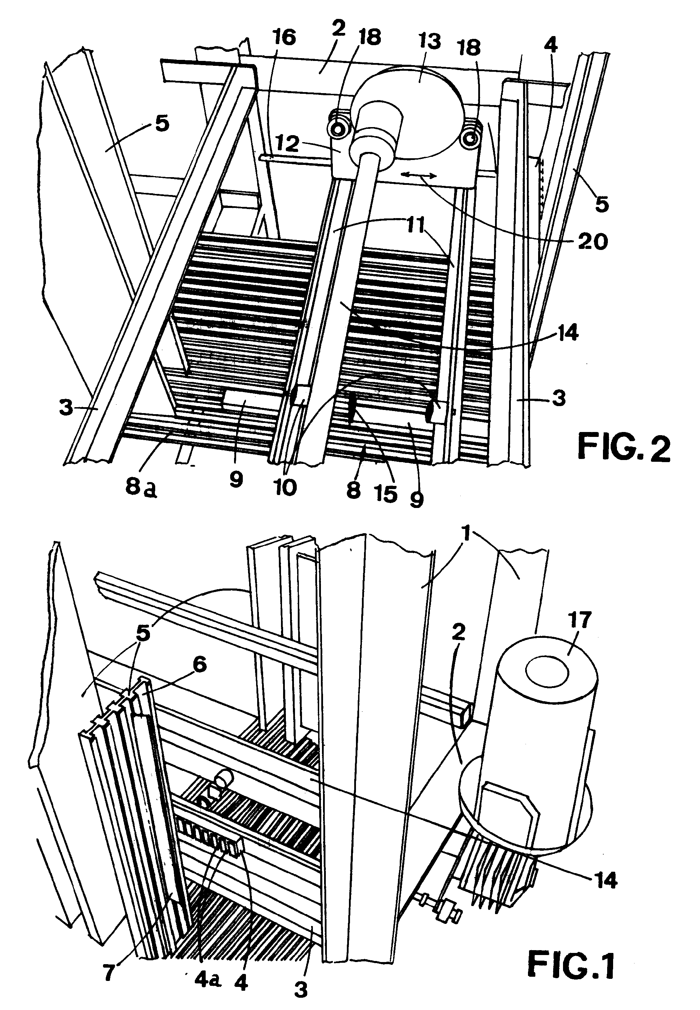

- fig 1 is a perspective from above, showing part of the automatic dispenser, and in particular, of the walls making up the vertical channels in which the boxes are stacked;
- fig 2 is a perspective of the automatic dispenser viewed from one side, intended especially to illustrate the means by which boxes are ejected.

With reference to the drawings, 1 denotes each of the upright members of a parallelepiped frame of lattice construction, which are interconnected by cross members 2 and two longitudinal members 3. 4 denotes a horizontally disposed longitudinal rail associated with the outer face of each longitudinal member 3, affording sockets 4a for the retention of first vertical walls denoted 5; each such wall 5 in turn affords grooves 6 into which to fit further vertical walls 7 disposed at right angles to the first wall 5.

The first walls 5 can be positioned selectively in the sockets 4a in such a way as to establish the width of a relative vertical channel, whereas the depth of the channel is determined by appropriate selection of the grooves 6 for insertion of the second walls 7.

Needless to say, the two dimensions in question will be dependent upon the dimensions of the box or container to be stacked in the channel.

In short, the section of a vertical channel created by assembly of the walls 5 and 7 will correspond to the dimensions of the box put into stock.

8 denotes a slotted table located beneath the cross members 2 and the longitudinal members 3 of the frame, each slot 8a of which slidably accommodates a push rod 9 consisting essentially in a prismatic bar, the thickness of which is such as enables its passage through a space existing between the bottom edge of the vertical walls and the top surface of the table 8.

Each rod 9 carries a metal plate 15 at one end, disposed in alignment with a solenoid 10 carried by a longitudinal beam 11.

The longitudinal beams 11 are rigidly associated with a plate 12, slidably supported by a rail 16 rigidly associated with the frame of the machine and capable of movement therealong in the direction as indicated by the arrow 20.

13 denotes a cam disk offered in tangential contact to two freely revolving followers 18 carried by the plate 12; the disk is keyed eccentrically to a rotatable shaft 14 driven by a geared motor 17.

Reciprocating motion of the two beams 11 serves to return the push rods to an initial at-rest position following ejection.

The solenoids are excited by a central processing unit by way of which operation of the push rods is selected according to the commodities that are to be dispensed.

Following operation, the rods 9 are returned to the at-rest position by rotation of the cam disk 13, which in turn produces the necessary movement of the longitudinal beams 11.

Boxes engaged and ejected by the push rods 9 will drop out onto a conveyor belt (not illustrated), located beneath the frame and coaxial with the slotted table 8, by which they are transferred to a convenient point at the front of the dispenser.

## Claims

1. An automatic dispenser for commodities packaged in boxes of parallelepiped or similar shape, comprising a plurality of vertical channels created in modular fashion from vertical walls (5) adjustable for position according to the dimensions of the boxes, the bottom ends of which are enclosed by a slotted table (8) comprising slidably mounted means (9) for the ejection of the boxes,
characterized
in that it further comprises:
- parallel longitudinal rails (4), each of which affording a plurality of sockets (4a);
- first vertical walls (5), positioned to match the width of the boxes, which are insertable in the sockets and in turn afford grooves (6);
- second vertical walls (7), insertable in the grooves (6) at right angles to the first walls and positioned to match the depth of the boxes.

2. A dispenser as in claim 1, characterized in that it comprises two parallel longitudinal rails (4), and in that the sockets (4a) and the grooves (6) are equispaced.

3. A dispenser as in claim 1, comprising a plurality of ejection means (9) traversed by respective solenoid controlled means (10) when ejecting and returned by mechanical means (11, 13) to an at-rest position.

## Patentansprüche

1. Automatischer Spender für in Dosen verpackte Waren von quaderförmiger oder ähnlicher Gestalt, dadurch gekennzeichnet, daß er aus mehreren senkrechten Kanälen besteht, die aus vertikalen, je nach Größe der Dosen modular verstellbaren Wänden (5) gebildet ist. Eine gerillte Ebene (8), auf der gleitende Dosenauswerfer (9) angebracht sind, schließt die o.g. Kanäle am unteren Ende ab. Weitere Merkmale des Spenders:
- zwei parallellaufende Längsbahnen (14), von denen jede mit mehreren Fassungen (4a) ausgestattet ist;
- eine erste Gruppe vertikaler Wände (5) zur Einstellung der Dosenweite, die in die Fassungen und in die Rillen (6) eingesetzt werden können;
- eine zweite Gruppe vertikaler Wände (7) zur Einstellung der Dosentiefe, die in die Rillen (6) rechtwinklig bezüglich der ersten Wände einzusetzen sind.

2. Ein Spender gemäß Anspruch 1, dadurch gekennzeichnet, daß er aus zwei parallelen Längsbahnen (4) besteht und, daß die Fassungen (4a) und die Rillen (6) gleichabständig sind.

3. Ein Spender gemäß Anspruch 1, der aus mehreren Auswerfern (9) besteht, die jeweils mit elektromagnetischer Steuerung (10) für das Auswerfen und mit mechanischen Mitteln (11, 13) zur Rückkehr in die Ruhestellung versehen sind.

## Revendications

1. Un distributeur automatique pour produits emballés dans des boîtes de forme parallélipipédique ou similaire comprenant une pluralité de cannelures verticales formées de façon modulaire à partir des parois verticales (5) dont la position peut être réglée selon la dimension des boîtes. Les fonds de ces boîtes sont serrés par une planche cannelée (8) qui comprend des moyens glissants (9) montés pour l'éjection des boîtes, caractérisé en ce fait qu'il comprend aussi:
- des rails longitudinaux parallèles (4), chacun desquels fournissant une pluralité de cavités (4a);
- des premières parois verticales, placées en face de la hauteur des boîtes, qui peuvent être introduites dans les cavités, et qui à leur tour fournissent des cannelures (6);
- des secondes parois verticales (7), qui peuvent être introduites dans les cannelures (6) à angle droit par rapport aux premières parois et placées en face de la profondeur des boîtes.

2. Un distributeur comme celui de la revendication 1, caractérisé en ce fait qu'il comprend deux rails longitudinaux parallèles (4), et que les cavités (4a) et les cannelures (6) sont équidistantes.

3. Un distributeur comme celui de la revendication 1, comprenant une pluralité de moyens d'éjection (9) déplacés latéralement par leurs respectifs moyens de contrôle solénoïdes (10) quand ils éjectent et replacés par des moyens mécaniques (11,13) dans leur position de repos.
